# EUROPEAN PATENT APPLICATION

(11) **EP 4 729 410 A1**
(43) Date of publication of application: **22.04.2026**
(21) Application number: 25184769.5
(22) Date of filing: 24.06.2025
(51) Int. Cl.: B64C 1/14, B60J 5/04, B60J 5/06, B60J 5/10, E05D 15/40, E05D 15/56, E05D 15/58

(54) **A HATCH ACTUATION MECHANISM**

(30) Priority: 21.10.2024 TR 2024014291
(71) Applicant: Tusas- Turk Havacilik Ve Uzay Sanayii Anonim Sirketi, 06980 Ankara (TR)
(72) Inventor: YILMAZ, Goker Can, 06980 ANKARA (TR); KELES, Muhammed Enes, 06980 ANKARA (TR); KOCYIGIT, Okan, 06980 ANKARA (TR)
(74) Representative: Berkkam, Ayfer

(57) **Abstract**

The present invention comprises a body (2) forming the aerodynamic surface of the aircraft, at least one opening (3) disposed on the body (2) and providing access to the outside of the body (2), at least one hatch (4) movably disposed on the body (2) and making the opening (3) at least partially accessible, a first bracket (5) disposed on the body (2) and allowing connection of the hatch (4) with the body (2), at least one second bracket (6) on the hatch (4) for connecting the hatch (4) with the body (2), a first position (I) in which the hatch (4) is arranged so as to substantially completely cover the opening (3), a second position (II) in which the opening (3) is rotated away from the opening (3) by rotating the opening (3) so that the first bracket (5) is the center of rotation, and a pivoting member (7) located between the first bracket (5) and the second bracket (6) so as to allow the opening (3) to perform a pivoting movement.

## Description

The present invention relates to a hatch actuation mechanism for actuating hatchs providing access to the interior of an aircraft.

Aircraft are equipped with hatchs that provide access to the interior of the aircraft. The hatchs in the aircraft are opened and closed by rotating around hinges. After the doors are opened, they are kept in the open position thanks to spring and piston structures. The opening directions of the covers are determined during production. There are closing and opening mechanisms so that the hatchs remain inside the aircraft. Closing and opening mechanisms occupy a certain volume inside the aircraft. When the hatchs in the aircraft are opened, the air flows in the harsh weather conditions that the aircraft will be exposed to create a force on the hatch surface area, and from time to time, the air flow creates torque and/or force in the opposite direction of the hatch opening direction, making it difficult for the user to open the hatch. When the hatch is opened in a position perpendicular to the aircraft fuselage, operational hazards may occur during closing and/or opening of the hatch due to the aerodynamic loads imposed on it.

In the patent document originating in the United States of America numbered US2008128555A1, which is in the known state of the art, an ejection device for an aircraft hatch cover having at least one hinge joint is disclosed. In the inventive system, the hinge is provided with a bottom member designed to be rotatably mounted to the structure of the aircraft and an upper member designed to be connected to the hatch panel. The bottom member and the upper member are reversibly connected to each other. The ejection device is detachable from the guide means to which the upper element of the knuckle hinge is connected in order to keep the upper element in the axis of rotation of the bottom element during the activation of the hatch. The upper member is thus separated from the bottom member of the hinge.

The present invention provides a hatch actuation mechanism which allows the hatchs of the aircraft to be opened and closed in such a manner as to prevent damage to the hatchs when subjected to aerodynamic loads.

It is a further object of the present invention to provide a hatch which can be opened and closed so as to occupy a minimum volume on the aircraft.

Another object of the present invention is to provide a hatch actuation mechanism which can be mounted on two different rotation centers and which can be controlled independently of the rotational movements and which can be opened and closed by sliding movement.

The hatch actuation mechanism developed to achieve the object of the invention, defined in the first claim and the claims dependent on this claim, comprises a body which is the outer surface of the aircraft and is in contact with the air. There is an opening in the form of a cavity on the fuselage which allows access into the fuselage. There is a hatch on the fuselage that can be opened and closed. The hatch provides access to the body through the opening. There is a first bracket positioned on the body that provides the connection between the body and the hatch. There is a second bracket positioned on the hatch, allowing connection of the body and the hatch. There is a first position (I) where the hatch is closed and closes the entire opening, preventing access into the opening. There is a second position (II) in which the hatch is brought into rotation around the first bracket by a user trigger. The angle between the hatch and the body in the second position (II) is different from the angle between the hatch and the body in the first position (I). Between the first bracket and the second bracket, there is a rotation element which enables the hatch to be rotated by user triggering.

The hatch actuation mechanism of the invention comprises an spacer which is positioned between the rotation element and the second bracket, and which helps the hatch to rotate thanks to the form in which it is connected with the rotation element, and which helps the hatch to move up and down on the body thanks to the form in which it is connected with the second bracket. There is a main center of rotation, which is the point where the spacer and the rotation element are connected to each other. The main center of rotation is the point where the hatch is moved at an angle relative to the first bracket as the second bracket moves away from the body. There is a rod, one end of which is attached to the second bracket and is slidably positioned within the spacer and along the direction in which the spacer extends, so that it slides within the spacer, allowing the hatch to slide almost parallel to the body.

In one embodiment of the invention, the hatch actuation mechanism comprises an auxiliary pivoting center to which the pivoting member and the first bracket are connected. The auxiliary pivot center allows the hatch to move between the first position (I) and the second position (II). The hatch also rotates around the main rotation center, which is a different point compared to the auxiliary rotation center. There is a spacer, one end of which has a spacer hole to allow it to be attached to the rod, and the other end is connected to the main center of rotation, allowing rotation around the main center of rotation. The spacer moves linearly on the rod, allowing the hatch to slide parallel to the body. The spacer has an eccentric form which allows the hatch to rotate around the center of rotation.

In one embodiment of the invention, the hatch actuation mechanism comprises a third position (III) in which the hatch is opened parallel to the body by sliding movement of the spacer on the rod and the opening is slightly opened and the opening is open by a greater amount compared to the second position (II). When the user triggers the hatch, the spacer slides on the rod and moves the hatch between the second position (II) and the third position (III).

In an embodiment of the invention, the hatch actuation mechanism comprises a fourth position (IV) where the spacer slides on the rod and the hatch moves upwards to leave the opening fully open and the hatch is locked on the body. Helping to hold the hatch in the fourth position (IV) is a protrusion extending from the hatch towards the body. There is a hole in the form of a cavity on the protrusion.

In one embodiment of the invention, the hatch actuation mechanism comprises a recess in the form of a recess on the body, which allows the hatch to be held locked to the body in the fourth position (IV). Within the recess, there is a pin in the form of a protrusion, which is compatible in form with the hole that helps the cap to remain fixed in the fourth position (IV). When the hatch is moved to the fourth position (IV), the pin is inserted into the hole.

In one embodiment of the invention, the hatch actuation mechanism comprises a rotation element manufactured in eccentric form so as to allow the hatch to perform rotational movement around both the main rotation center and the auxiliary rotation center, either separately or simultaneously.

In one embodiment of the invention, the hatch actuation mechanism comprises a spacer for rotational movement of the hatch by means of an end connected to the rotation member. By means of the end of the spacer connected to the rod, the hatch is allowed to perform a sliding movement.

In one embodiment of the invention, the hatch actuation mechanism comprises a spacer, one end of which is positioned on the main rotation center and the other end of which is positioned on the rod to perform rotational movement, and which is manufactured in an eccentric form to enable rotational movement.

In one embodiment of the invention, the hatch actuation mechanism comprises a rotation element having a substantially C-shape, which by means of the C-shape allows the hatch to be rotated in such a way that it is centered on the main center of rotation. The rotation element, thanks to its C-form, can be triggered independently of the rotation of the hatch around the main center of rotation and allows the hatch to be rotated around the auxiliary center of rotation. The rotation element also allows the hatch to be positioned so as to remain parallel with the body.

In one embodiment of the invention, the hatch actuation mechanism comprises a third bracket located on the hatch and positioned opposite the second bracket, so as to be attached to the end of the rod not connected to the second bracket. The hatch includes a hatch upper area in which the hatch remains stationary on the first bracket when the hatch is moved between the first position (I) and the second position (II). When the hatch is moved to the fourth position (IV), the hatch comprises a bottom area, wherein the pivoting member and the spacer remain in closer proximity to the third bracket than to the second bracket.

In one embodiment of the invention, the hatch actuation mechanism comprises fasteners for attaching the rotation element to the first bracket from an auxiliary pivot center. The rotation element comprises fasteners for attaching the rotation element to the spacer from the main pivoting center.

In one embodiment of the invention, the hatch actuation mechanism comprises an eccentrically shaped spacer having a shape such that the axis extending through the spacer hole at the end attached to the second bracket and the extension of the axis extending through the fastener attached to the main rotation center are perpendicular to each other.

In one embodiment of the invention, the hatch actuation mechanism comprises a first bracket positioned between the pivoting member and the hatch. The rotation element comprises a second bracket positioned in the center of the C-form. Between the first bracket and the second bracket is a rotation element positioned at two different ends of the C-form. A rod extending in parallel with the hatch and positioned almost perpendicular to the direction in which the second bracket extends.

The measurement system for achieving the object of the present invention is shown in the accompanying figures;

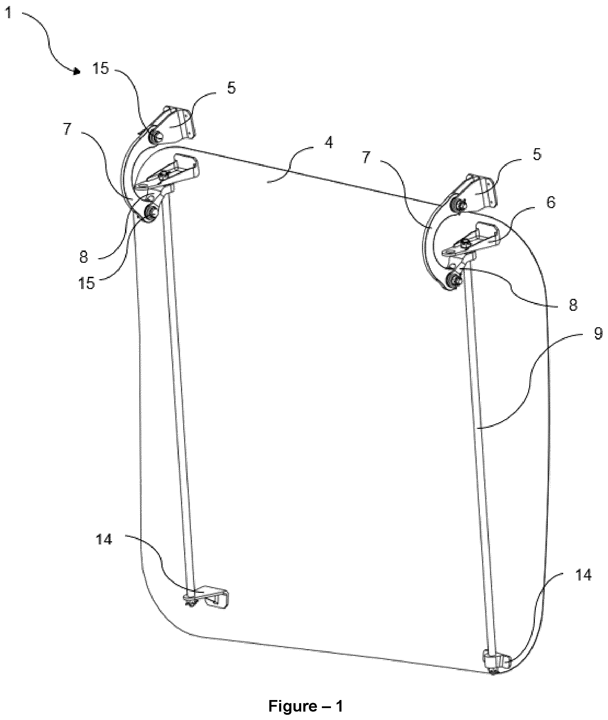

Figure 1 - Perspective view of the hatch actuation mechanism.

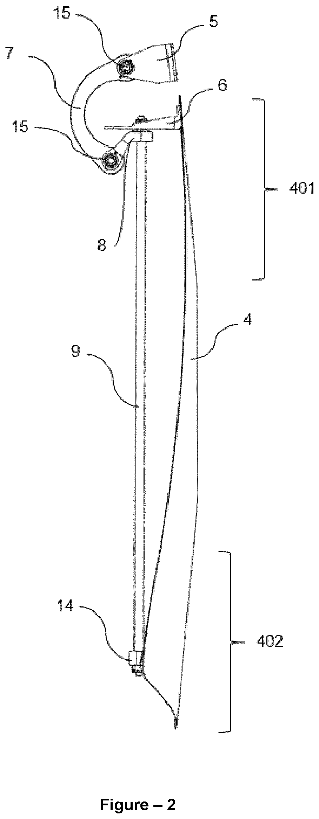

Figure 2 - Side view of the hatch actuation mechanism.

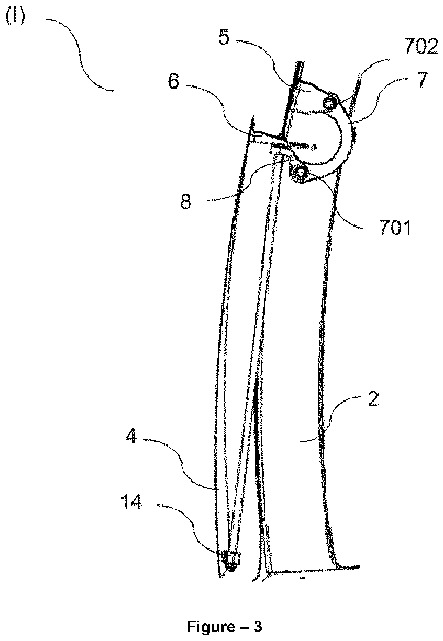

Figure 3 - First position (I) view of the hatch actuation mechanism.

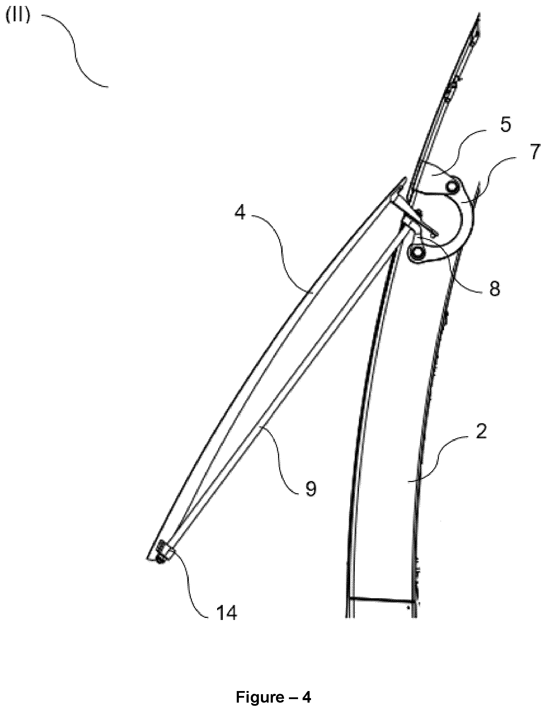

Figure 4 - View of the hatch actuation mechanism in the second position (II).

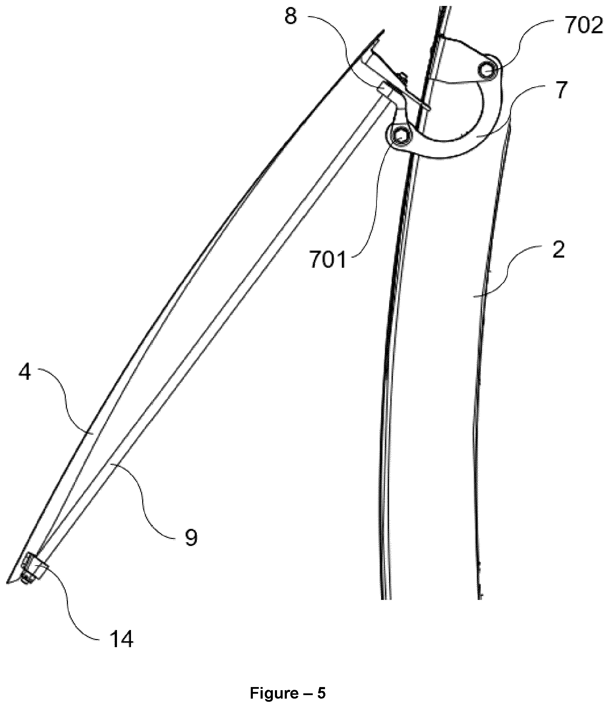

Figure 5 - Perspective view of the hatch actuation mechanism.

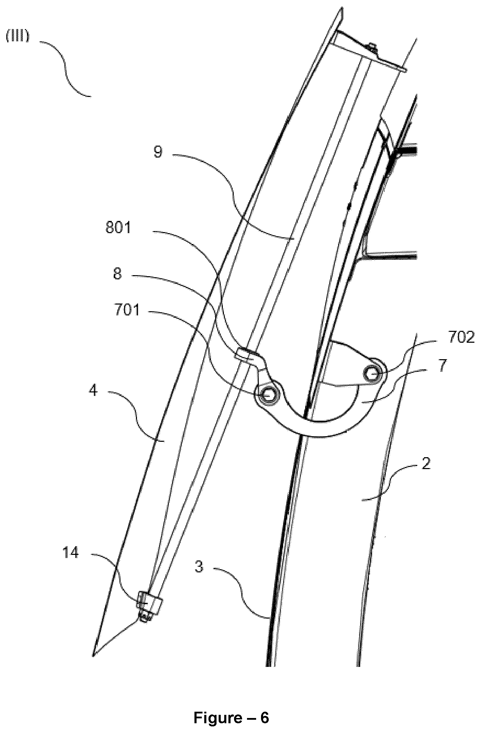

Figure 6 - View of the hatch actuation mechanism in the third position (III).

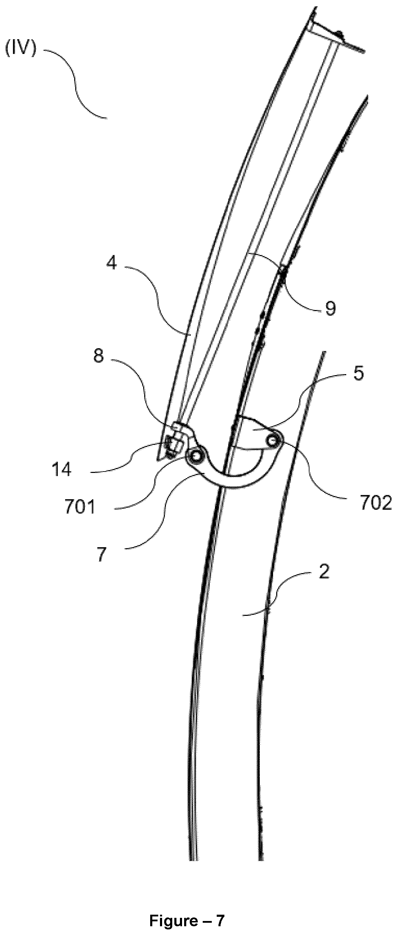

Figure 7 - View of the hatch actuation mechanism in the fourth position (IV)

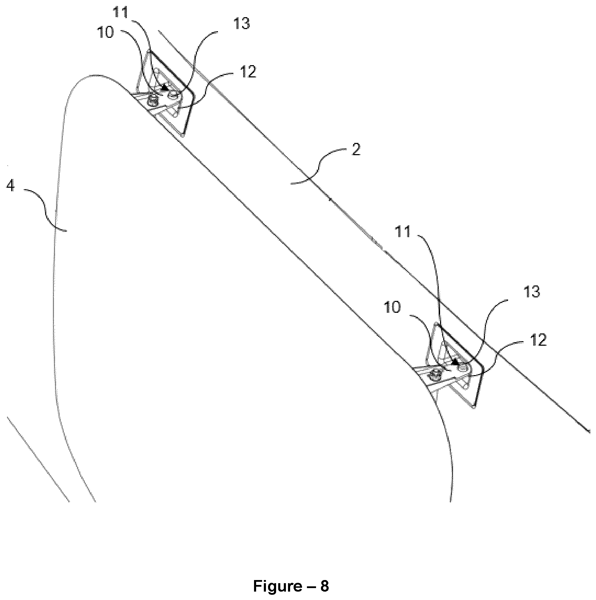

Figure 8 - Perspective view of body, hatch, protrusion, hole, slot, pin.

The parts in the figures are individually numbered and the corresponding numbers are given below.
1. Hatch actuation mechanism
2. Body
3. Opening
4. Hatch
   401. Hatch top area
   402. Hatch bottom area
5. First bracket
6. Second bracket
7. Rotation element
   701. Main center of location
   702. Auxiliary center of rotation
8. Spacer
   801. Spacer hole
9. Rod
10. Protrusion
11. Hole
12. Slot
13. Pin
14. Third bracket
15. Fastener
   (I) First position
   (II) Second position
   (III) Third position
   (IV) Fourth position

The hatch actuation mechanism (1) comprises a body (2) forming the aerodynamic surface of the aircraft, at least one opening (3) located on the body (2) and providing access to the outside of the body (2), at least one hatch (4) movably located on the body (2) and making the opening (3) at least partially accessible, a first bracket (5) located on the body (2) and allowing connection of the hatch (4) with the body (2), The hatch (4) comprises at least one second bracket (6) located on the hatch (4) and enabling connection of the hatch (4) with the body (2), a first position (I) in which the hatch (4) is located so as to almost completely cover the opening (3), a second position (II) in which the hatch (4) is rotated away from the opening (3) by rotating the first bracket (5) so that the first bracket (5) is the center of rotation, and a rotation element (7) located between the first bracket (5) and the second bracket (6) so as to enable the hatch (4) to perform a pivoting movement.

The inventive hatch actuation mechanism (1) comprises at least one spacer (8) between the rotation element (7) and the second bracket (6), which, by its connection with the rotation element (7), enables the hatch (4) to perform a pivoting movement and, by its connection with the second bracket (6), enables the hatch (4) to move almost linearly, a main pivoting center (701), which is the point where the rotation element (7) and the spacer (8) are connected and which allows the hatch (4) to move at an angle with respect to the first bracket (5) simultaneously while the second bracket (6) moves away from the body (2), at least one rod (9), one end of which is located on the second bracket (6) and is movable in the spacer (8) along its length, and which is triggered by the user and allows the hatch (4) to be moved by sliding it in the spacer (8). (Figure - 1, Figure - 2)

There is a body (2) which is the aerodynamic surface of the aircraft. On the body (2) there is at least one opening (3) providing access to the outside of the fuselage. On the body (2) is a hatch (4) which is movable and makes the opening (3) at least partially accessible. The body (2) is provided with a first bracket (5) for attaching the hatch (4) to the body (2). The hatch (4) is provided with a second bracket (6) for connecting the hatch (4) to the body (2). The hatch (4) is arranged so as to almost completely cover the opening (3) in the first position (I). A second position (II) is provided in which the hatch (4) is rotated so that the first bracket (5) is the center of rotation and is brought at least partially away from the opening (3). A rotation element (7) is provided between the first bracket (5) and the second bracket (6) to allow rotation of the hatch (4).

Between the rotation element (7) and the second bracket (6) is a spacer (8) which, by means of its connection with the rotation element (7), allows the hatch (4) to rotate. The spacer (8) allows linear movement of the hatch (4) by means of its connection with the second bracket 7 (6). The main center of rotation (701) is located at the point where the rotation element (7) and the spacer (8) are connected. The main center of rotation (701) allows the hatch (4) to move at an angle with respect to the first bracket (5) simultaneously with the second bracket (6) moving away from the body (2). There is a rod (9), one end of which is located on the second bracket (6), which moves the cover by sliding in the spacer (8) upon triggering by the user. In this way, it is possible for the hatch (4) to perform both rotational movement and sliding movement on the rod (9) by means of a single structure.

In one embodiment of the invention, the hatch actuation mechanism (1) comprises an auxiliary pivoting center (702), which is the point where the rotation element (7) is connected to the first bracket (5) and which allows the hatch (4) to move between the first position (I) and the second position (II), It comprises a spacer (8) having an eccentric form, one end of which includes at least one spacer hole (801) to be placed on the rod (9) and the other end of which is rotatably attached to the main rotation center (701), and thus allows the hatch (4) to simultaneously perform linear movement on the rod (9) and rotational movement around the main rotation center (701) by sliding movement on the rod (9). In this way, the hatch can be moved independently of each other by means of two different rotational movements and one linear movement by means of the spacer (8), which is a single part.

In one embodiment of the invention, the hatch actuation mechanism (1) comprises a third position (III) in which the hatch (4) is brought to be substantially parallel with the body (2) by sliding the spacer (8) on the rod (9) and access through the opening (3) into the body (2) is at least partially provided, the spacer (8) allowing the hatch (4) to be moved between the second position (II) and the third position (III) by sliding on the rod (9) by applying force by the user. In this way, the spacer (8) of the device is slide on the rod (9) so that the hatch (4) keeps the opening (3) slightly open.

In an embodiment of the invention, the hatch actuation mechanism (1) comprises a fourth position (IV) in which the spacer (8) is slidably brought over the rod (9) so that the hatch (4) is almost completely parallel to the body (2) and the opening (3) is almost completely open and the hatch (4) is fixed in a locked position on the body (2), The hatch (4) comprises at least one protrusion (10) extending from the hatch (4) towards the body (2), and at least one hole (11) located on the protrusion (10), which allows the hatch (4) to be fixed in the fourth position (IV). In this way, the hatch (4) can be moved to the fourth position (IV), leaving the opening (3) fully open, and can be kept fixed in the fourth position (IV).

In one embodiment of the invention, the hatch actuation mechanism (1) comprises at least one slot (12) on the body (2) having the form of a recess , which allows the hatch (4) to be fixed in the fourth position (IV), at least one pin (13) extending in the slot (12) and which is form compatible with the hole (11), which allows the hatch (4) to be positioned and fixed almost completely parallel to the body (2) when the hatch (4) is brought to the fourth position (IV). In this way, the hatch (4) is securely fixed to the body (2) in the fourth position (IV).

In one embodiment of the invention, the hatch actuation mechanism (1) comprises an eccentric rotation element (7) which allows the hatch (4) to perform two different rotational movements independently of each other around the main rotation center (701) and the auxiliary rotation center (702). In this way, it is possible to rotate the hatch (4) in such a way that it is pivoted both to the main rotation center (701) and to the auxiliary rotation center (702).

In one embodiment of the invention, the hatch actuation mechanism (1) comprises a spacer (8) which allows the hatch (4) to rotate by means of the end connected to the rotation element (7) and the hatch (4) to slide on the rod (9) by means of the end connected to the rod (9). In this way, it is possible for the hatch (4) to perform rotational movement and linear movement with a single spacer (8).

In one embodiment of the invention, the hatch actuation mechanism (1) comprises a spacer (8) having an eccentric form, one end of which is located at the main rotation center (701) and the other end is movable on the rod (9). In this way, the rod (9) is connected to the main rotation center (701).

In one embodiment of the invention, the hatch actuation mechanism (1) comprises a pivoting member (7) having an almost C-shape, which allows the hatch (4) to rotate about the main pivoting center (701), and which allows the hatch (4) to rotate about the auxiliary pivoting center (702) independently of the rotational movement of the hatch (4) about the main pivoting center (701), and which allows the hatch (4) to be brought into a position almost completely parallel to the body (2). Thanks to the rotation element (7), two different rotational movements and sliding movements can be adjusted by the user in the desired amounts.

In one embodiment of the invention, the hatch actuation mechanism (1) comprises a third bracket (14), which is arranged on the hatch (4) so as to be opposite the second bracket (6) and mounted on the end of the rod (9) which is not connected to the second bracket (6), The hatch (4) comprises at least one hatch upper area (401) located on the hatch (4), which allows the hatch (4) to be held stationary on the first bracket (5) when the hatch (4) moves between the first position (I) and the second position (II), and at least one hatch bottom area (402) located on the hatch (4), which is the area where the rotation element (7) and the spacer (8) are positioned close to the third bracket (14) when the hatch (4) is moved to the fourth position (IV). In this way, the hatch (4) can be fixed to the body (2) in the fourth position (IV) which leaves the opening (3) fully open.

In one embodiment of the invention, the hatch actuation mechanism (1) comprises a plurality of fasteners (15) for pivotably mounting the rotation element (7) to the first bracket (5) on the auxiliary pivoting center (702), for pivotably mounting the rotation element (7) to the spacer (8) on the main pivoting center (701). In this way, the rotation element (7) is rotatably mounted both on the first bracket (5) and on the spacer (8).

In one embodiment of the invention, the hatch actuation mechanism (1) comprises a spacer (8) having an eccentric form in which the axis extending through the spacer hole (801) at the end connected to the second bracket (6) and the axis extending through the fastener (15) on the main rotation center (701) extend almost perpendicular to each other. In this way, the hatch (4) can be moved in different axes with the use of fewer parts.

In one embodiment of the invention, the hatch actuation mechanism (1) comprises a first bracket (5) which is located between the rotation element (7) and the hatch (4), a second bracket (6) which is located almost in the center of the C form of the rotation element (7), a rotation element (7) which is located between the first bracket (5) and the second bracket (6) so as to form a C form, a rod (9) which extends almost parallel to the hatch (4) and almost perpendicular to the direction in which the second bracket (6) extends. In this way, it is possible to move the hatch (4) in different axes with the use of fewer parts.

## Claims

1. A hatch actuation mechanism (1), comprising a body (2) forming the aerodynamic surface of the aircraft, at least one opening (3) located on the body (2) and providing access to the outside of the body (2), at least one hatch (4) movably located on the body (2) and making the opening (3) at least partially accessible, a first bracket (5) located on the body (2) and allowing connection of the hatch (4) with the body (2), at least one second bracket (6) located on the hatch (4) and allowing connection of the hatch (4) with the body (2), a first position (I) wherein the hatch (4) is arranged so as to almost completely cover the opening (3), a second position (II) in which the hatch (4) is moved away from the opening (3) by rotating the first bracket (5) so that it is the center of rotation, a pivoting member (7) located between the first bracket (5) and the second bracket (6) to allow the hatch (4) to pivot, **characterized by** at least one spacer (8) located between the pivoting element (7) and the second bracket (6), which, by virtue of its connection with the pivoting element (7), enables the hatch (4) to perform a pivoting movement and, by virtue of its connection with the second bracket (6), enables the hatch (4) to perform a substantially linear movement, a main pivoting center (701), which is the point at which the pivoting member (7) and the spacer (8) are connected and which allows the hatch (4) to move at an angle relative to the first bracket (5) simultaneously with the second bracket (6) moving away from the body (2), at least one rod (9), one end of which is located on the second bracket (6) and is movable along its length in the spacer (8), and which is triggered by the user and allows the hatch (4) to be moved by sliding it in the spacer (8).

2. A hatch actuation mechanism (1) according to claim 1, **characterized by** an auxiliary pivoting center (702), which is the point at which the rotation element (7) is connected to the first bracket (5) and which allows the hatch (4) to move between the first position (I) and the second position (II), the spacer (8) has an eccentric form, comprising at least one spacer hole (801), one end of which is disposed on the rod (9) and the other end of which is pivotably attached to the main rotation center (701), thereby sliding on the rod (9) and allowing the hatch (4) to simultaneously move linearly on the rod (9) and rotate around the main rotation center (701).

3. A hatch actuation mechanism (1) according to claim 1 or claim 2, **characterized by** the spacer (8) being slidably movable on the rod (9) so that the hatch (4) is substantially parallel to the body (2) and the opening (3) is at least partially accessible into the body (2), the third position (III) and the spacer (8) allowing the hatch (4) to move between the second position (II) and the third position (III) by sliding the spacer (8) on the rod (9) applying force by a user.

4. A hatch actuation mechanism (1) according to any one of the preceding claims, **characterized by** a fourth position (IV), in which the spacer (8) is brought into sliding movement on the rod (9) such that the hatch (4) is substantially completely parallel to the body (2) and the opening (3) is substantially completely open and the hatch (4) is fixed in a locked position on the body (2), at least one protrusion (10) extending from the hatch (4) towards the body (2) and allowing the hatch (4) to be fixed in the fourth position (IV), and at least one hole (11) in the protrusion (10).

5. A hatch actuation mechanism (1) according to claim 4, **characterized by** at least one slot (12) having the form of a recess on the body (2), which allows the hatch (4) to be fixed in the fourth position (IV), and at least one pin (13) in the slot (12), which is form-compatible with the hole (11), which allows the hatch (4) to be positioned and fixed substantially exactly parallel to the body (2) when the hatch (4) is moved to the fourth position (IV).

6. A hatch actuation mechanism (1) according to any one of claims 2-5, **characterized by** a rotation element (7) in eccentric form, which allows the hatch (4) to perform two different pivoting movements independently of each other around the main pivoting centre (701) and the auxiliary pivoting centre (702).

7. A hatch actuation mechanism (1) according to any one of the preceding claims, **characterized by** a spacer (8) which is, by means of an end connected to the pivoting member (7), allowing the hatch (4) to perform a rotational movement and, by means of an end connected to the rod (9), allowing the hatch (4) to perform a sliding movement on the rod (9).

8. A hatch actuation mechanism (1) according to any one of the preceding claims, **characterized by** the spacer (8) having an eccentric form, with one end of which is located at the main pivoting centre (701) and the other end of which is movable on the rod (9).

9. A hatch actuation mechanism (1) according to any one of claims 2-8, **characterized by** a rotation element (7) having substantially a C-shape and thereby enabling the hatch (4) to pivot around the main pivoting centre (701), the rotation element (7) enabling the hatch (4) to pivot around the auxiliary pivoting centre (702) independently of the pivoting movement of the hatch (4) around the main pivoting centre (701), and enabling the hatch (4) to be brought into a position substantially parallel to the body (2).

10. A hatch actuation mechanism (1) according to any one of the preceding claims, **characterized by** a third bracket (14) located on the hatch (4) so as to be opposed to the second bracket (6) and mounted on the end of the rod (9) not connected to the second bracket (6), at least one hatch upper area (401) located on the hatch (4) and allowing the hatch (4) to be held stationary on the first bracket (5) while the hatch (4) moves between the first position (I) and the second position (II), at least one hatch bottom area (402) located on the hatch (4) and being the region where the rotation element (7) and the spacer (8) are positioned proximate to the third bracket (14) when the hatch (4) is moved to the fourth position (IV).

11. A hatch actuation mechanism (1) according to any one of the claims 2-10, **characterized by** a plurality of fasteners (15) allowing the pivoting element (7) to be pivotably mounted to the first bracket (5) on the auxiliary pivoting centre (702), allowing the pivoting element (7) to be pivotably mounted to the spacer (8) on the main pivoting centre (701).

12. A hatch actuation mechanism (1) according to claim 11, **characterized by** the spacer (8) having an eccentric form in which the axis along which the spacer bore (801) extends at the end connected to the second bracket (6) and the axis along which the fastener (15) extends on the main rotation center (701) extend substantially perpendicular to each other.

13. A hatch actuation mechanism (1) according to any one of the preceding claims, **characterized by** the first bracket (5) located between the pivoting element (7) and the hatch (4), the second bracket (6) located almost in the center of the C-shape of the rotation element (7), the pivoting member (7) is arranged between the first bracket (5) and the second bracket (6) in a C-shape, the rod (9) extending substantially parallel to the lid (4) and substantially perpendicular to the direction in which the second bracket (6) extends.
